(19) **Europäisches Patentamt**

**European Patent Office**

**Office européen des brevets**

(11) **EP 0 969 274 A2**

(12) **EUROPÄISCHE PATENTANMELDUNG**

(43) Veröffentlichungstag:
05.01.2000 Patentblatt 2000/01

(51) Int. Cl.⁷: **G01M 1/22**, G01H 9/00

(21) Anmeldenummer: **99111889.4**

(22) Anmeldetag: **21.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.06.1998 DE 19828498**

(71) Anmelder:
**Fraunhofer-Gesellschaft zur Förderung der angewandten Forschung e.V.
80636 München (DE)**

(72) Erfinder:
• **Kalkowski, Gerhard, Dr. rer.nat.
07743 Jena (DE)**
• **Guyenot, Volker, Dipl.-Phys. Dr.
07749 Jena (DE)**
• **Risse, Stefan, Dipl.-Ing.
07749 Jena (DE)**

(74) Vertreter:
**Pfenning, Meinig & Partner
Mozartstrasse 17
80336 München (DE)**

(54) **Verfahren und Vorrichtung zum Messen von Unwuchten an rotierenden Körpern**

(57) Die Erfindung betrifft ein Verfahren und Vorrichtung zum Messen von Unwuchten an rotierenden Körpern, die den hierfür erforderlichen Aufwand verringern, die Meßgenauigkeit erhöhen und mit denen Unwuchten auch an relativ kleinen und/oder leichten Rotoren bestimmt werden können. Erfindungsgemäß wird dabei so vorgegangen, daß mit einem Sensor ein Signal zur Zuordnung der Phase von Meßsignalen bezüglich der azimutalen Lage eines Rotors und mit mindestens zwei Laservibromtern, lokal voneinander getrennt, der jeweilige Schwingungsweg und/oder die Schwingungsgeschwindigkeit am Rotor und/oder seiner Lagerung in radialer Richtung zeitaufgelöst gemessen werden.

Figur 1

EP 0 969 274 A2

**Beschreibung**

Die Erfindung betrifft ein Verfahren und eine Vorrichtung zum Messen und ggf. dem Verringern der Unwucht von rotierenden Körpern, im weiteren Rotoren genannt.

Es ist allgemein bekannt, die durch Unwucht angeregten radialen Schwingungen eines sich drehenden Rotors mit geeigneten Sensoren in einer steifen Lagerung zu messen. Hierfür können bekannte Kraftmeßsensoren eingesetzt werden.

Werden nachgiebige Lagerungen in solchen Vorrichtungen verwendet, können die auftretenden Unwuchten mit Weg-, Geschwindigkeits- oder Beschleunigungsmeßsensoren phasenempfindlich bestimmt werden.

Es wird an mindestens zwei verschiedenen Orten eines solchen Rotors zeitgleich gemessen, wobei mindestens ein zusätzliches Triggersignal verwendet werden muß, um die phasenrichtige Zuordnung der Meßsignale zum Umfang (Azimutal) des Rotors zu ermöglichen. Hierfür wird mit dem entsprechenden Triggersignal ein Zeit- oder Phasennullpunkt für die Meßsignale festgelegt. Der drehfrequente Schwingungsanteil wird isoliert und hinsichtlich Amplitude und Phase analysiert, um die erforderlichen Ausgleichsmaßnahmen für die Beseitigung der Unwucht(en) zu ermöglichen.

Werden Wegmeßsensoren für die Erfassung von Unwuchten an sich drehenden Rotoren verwendet, sind diese in der Regel auf speziellen Schwingtischen angeordnet. Die bei der Drehung auftretenden Unwuchtkräfte regen Schwingungen an und führen zu Auslenkungen. Es können beispielsweise Geschwindigkeiten in relativ großen Tauchspulenaufnehmern empfindlich erfaßt werden. (W. Kellenberger; "Elastisches Wuchten"; Springer-Verlag Berlin, Heidelberg, New York, London, Paris (1987)). Prinzipiell sind für solche schwingenden Aufbauten auch kleinere piezoelektrische Vibrationssensoren mit einer integrierten Schwingmasse geeignet. Durch eine entsprechend weiche Lagerung eines solchen Schwingtisches, können große Auslenkungen und hierdurch gegenüber den kraftmessenden Verfahren höhere Empfindlichkeiten erreicht werden.

Bei den bekannten Lösungen sind jedoch generell mechanische Verbindungen und Befestigungen erforderlich und es müssen am bzw. im Gehäuse einer solchen Rotor-Baugruppe entsprechend angepaßte mechanische Adapter vorhanden sein. Insgesamt ist der konstruktive und Handhabungsaufwand für das Ausgleichen bzw. Erfassen von Unwuchten der Rotoren relativ hoch. Außerdem wird durch die Eigenmasse der Sensoren das Meßobjekt beeinflußt, was sich insbesondere auf die Meßempfindlichkeit bei kleinen und leichten Rotoren und demzufolge auch auf die Güte des Auswuchtgrades negativ auswirkt. Die bekannten Verfahren und Vorrichtungen sind, wenn überhaupt, nur sehr bedingt für kleine Rotoren und solche mit relativ kleiner Masse geeignet. Durch die mechanische Adaption kann nur die Lagerung oder das Gehäuse des Rotors, aber nicht dieser selbst angetastet werden. Es ist demzufolge nur eine mittelbare Messung der Größen und ein entsprechend schlechterer Aussagewert für die Eigenschaften eines so vermessenen und ausgeglichenen Rotors möglich. Bei nachgiebiger Lagerung treten grundsätzlich gekoppelte Schwingungserscheinungen auf, die die Messung und Auswertung stark verkomplizieren können. Dieser Nachteil wirkt sich insbesondere bei fluid- und ganz besonders bei gasgeschmierten Lagerungen negativ aus, da neben den eigentlich unwuchterregten Schwingungen zusätzlich selbsterregte Schwingungen auftreten können, die im Resonanzfall bis zur Zerstörung führen.

Es ist daher Aufgabe der Erfindung, Möglichkeiten vorzugeben, die den Aufwand verringern, die Meßgenauigkeit erhöhen und mit denen Unwuchten auch an relativ kleinen und/oder leichten Rotoren bestimmt werden können.

Erfindungsgemäß wird diese Aufgabe mit den Merkmalen des Patentanspruchs 1 gelöst. Vorteilhafte Ausgestaltungsformen und Weiterbildungen der Erfindung, ergeben sich bei Nutzung, der in den untergeordneten Ansprüchen enthaltenen Merkmale.

Erfindungsgemäß soll für die Messung und Beseitigung bzw. zumindest der Verringerung von Unwuchten an Rotoren ein optisches Meßsystem, unter Verwendung von mindestens zwei sogenannter Laservibrometer eingesetzt werden. Diese Geräte auf Basis heterodyner Interferometrie, unter Verwendung von kohärentem Licht (Laserlicht) ermöglichen es, Schwingungen zeitaufgelöst zu messen. Bei Schwingungen kann sowohl der Schwingweg, wie auch die Schwinggeschwindigkeit, jeweils vorzeichenrichtig bestimmt werden. Mit diesem Meßverfahren sind absolute Wegmessungen auch bei hochdynamischen Systemen, mit einer Genauigkeit von ca. 2 nm bei 20 kHz Abtastung möglich. Werden Schwinggeschwindigkeiten erfaßt, so kann durch zeitliche Integration auf den Weg zurückgeschlossen werden. Die kleinen erfaßbaren Schwinggeschwindigkeiten liegen bei etwa 300 nm/s.

Durch die gleichzeitige und unabhängig voneinander vorgenommene Messung, an verschiedenen Meßstellen, wobei mindestens zwei Laservibrometer verwendet werden müssen, beseitigen die aus dem Stand der Technik bekannten Nachteile, durch die praktisch berührungslose Messung. Bei einem solchen Laservibrometer wird ein Teilstrahl einer Laserlichtquelle auf das zu messende Objekt (Rotor) bzw. die Lagerung eines solchen gerichtet und der jeweilige Schwingweg oder die Schwinggeschwindigkeit mit Hilfe eines zweiten Teilstrahls (Referenzstrahl) der Laserlichtquelle eines solchen Laservibrometers bestimmt. Dieser zweite Teilstrahl durchläuft innerhalb des Gerätes einen geometrisch invarianten Referenzkreis und wird dabei um einen konstanten Wert frequenzverschoben. Das vom Rotor bzw. dessen Lagerung reflektierte Licht wird mit dem frequenzverschobenen Teilstrahl zur Interferenz gebracht und so kann der Schwingweg und/oder die Schwingungsgeschwindigkeit phasenabhängig gemessen werden.

Für die Anwendung zur Unwuchtmessung müssen die eingesetzten Laservibrometer über den gesamten Frequenzbereich einen festen und bekannten Phasenbezug zueinander aufweisen, der vorzugsweise bei einem Phasenversatz unterhalb 1 % liegt. Die Laservibrometer wirken zeitlich und lokal hochauflösend und es ist mit ihnen auch ohne weiteres möglich, die Messung direkt am Rotor durchzuführen. Dabei werden die auf den Rotor gerichteten Teilstrahlen der Laservibrometer möglichst orthogonal zur Rotationsachse in einer Ebene ausgerichtet. Wie bereits o.g. angedeutet, können diese Teilstrahlen aber auch auf die Halterung bzw. Lagerung des Rotors gerichtet werden, was für bestimmte Anwendungen, auf die nachfolgend noch näher eingegangen werden soll, sinnvoll ist.

Neben den mindestens zwei Laservibrometern wird ein weiterer Sensor verwendet, um die Meßsignale, die mit den Laservibrometern erfaßt werden, der jeweiligen azimutalen Lage des Rotors, als Funktion der Zeit und demzufolge auch den Schwingungssignalen zeitlich zuordenbar zu machen. Mit diesem Sensor muß demzufolge mindestens ein Signal bei jeder vollen Umdrehung eines Rotors erfaßt werden.

Durch die Anwendung eines optischen Meßverfahrens, ohne direkte mechanische Ankopplung, können wesentliche Vorteile bei der Bestimmung von Unwuchten an Rotoren erreicht werden. Es treten nur vernachlässigbare Beeinflussungen auf das gesamte Meßsystem auf. Es werden keine Freiheitsgrade der Bewegung des Rotors durch das Meßsystem eingeschränkt und der Übertrag von Impuls und Energie sind vernachlässigbar.

Durch die Möglichkeit einer direkten Messung am Rotor ergeben sich neue Möglichkeiten. So können die Lager festgehalten und aus den Rotorschwingungen elastische Lagerparameter bestimmt werden. Es kann die Meßgenauigkeit und dies insbesondere bei kleinen und Rotoren mit geringen Massen aufgrund der vernachlässigbaren Beeinflussung deutlich erhöht werden und es ist eine eindeutige Abgrenzung gegenüber den bei der Messung selbstverständlich auch auftretenden Lager- oder Gehäuseschwingungen möglich. Durch die direkte Messung, der eigentlichen Rotorschwingungsbewegungen, können auch Schlüsse bezüglich der Lagerung, aus vergleichenden Messungen an Rotor und der Lagerung erhalten werden.

Durch die direkte und berührungslose Messung am Rotor können erstmalig auch flexible Rotoren, d.h. Rotoren an denen modale Formveränderungen bei der Drehung auftreten, unmittelbar erfaßt und berücksichtigt werden. Dadurch, daß die für die Messung verwendeten Teilstrahlen der Laservibrometer über eine entsprechende Optik aus einer Entfernung auf den Rotor gerichtet werden, besteht die Möglichkeit, den Meßpunkt während der Messungen zum Rotor ohne weiteres und gefahrlos zu verändern. Für die Übertragung der Laserlichtstrahlen können diese mit einer Ein-, Auskoppel- bzw. Fokussieroptik durch Lichtwellenleiter geführt und auf das Meßobjekt, nämlich den Rotor oder gegebenenfalls dessen Lagerung gerichtet werden.

Die Anforderungen an die Meßfläche, mit der der Rotor und/oder dessen Lagerung optisch abgetastet wird, sind sehr gering und gestatten eine hohe Flexibilität und einen geringen Zeitaufwand für die Messung. Normalerweise muß keine Vorbereitung der jeweiligen Oberfläche durchgeführt werden, da üblicherweise bereits fertigungsbedingt eine ausreichende Mikrorauhigkeit vorhanden ist, um über die jeweils optisch angemessene Fläche, die benötigte diffuse Reflexion und demzufolge eine ausreichende Lichtintensität des jeweils reflektierten Teilstrahls sicher zu stellen.

Diese Anforderung wird sowohl für die verschiedenen Metalle, Keramiken aber auch bei geschliffenen Oberflächen erfüllt und es ist lediglich bei hochpolierten bzw. einkristallinen Oberflächen eine entsprechende Oberflächenbehandlung erforderlich. Dadurch erhöht sich die Flexibilität für die verschiedensten Anwendungen, auch für Großgeräte bzw. im Servicebereich, so daß auch eine nachträgliche Unwuchtmessung an bereits installierten Turbinen bzw. anderen großformatigen Antriebselementen möglich wird.

Neben dem bereits erwähnten verringerten konstruktiven und verringerten Meßaufwand vor der jeweiligen Messung, können außerdem neue zusätzliche Freiheitsgrade bei der Durchführung solcher Unwuchtmessungen erschlossen werden, da der Meßort variabel verändert werden kann. Bei flexiblen Rotoren ist die Erfassung modaler Formveränderungen, bei Drehzahländerung möglich.

Mit der erfindungsgemäßen Lösung können absolute Wegmessungen durchgeführt werden. Mit den Laservibrometern werden die Interferenzstreifen des Teilstrahls, für die eigentliche Messung und des Teilstrahls, der als Referenzsignal dient, ausgezählt und in Verbindung mit der Wellenlänge $\lambda$ der Laserlichtquelle ein absoluter Wegmaßstab mit der Einheit $\lambda/2$ erhalten. Durch Interpolation gegenwärtig kann eine Wegauflösung bis etwa 2 nm erreicht werden. Ein solcher inhärenter Maßstab ist von grundsätzlicher Bedeutung und kann in verschiedenster Weise ausgenutzt werden. So können z.B. durch Rotor- oder Lager-Auslenkungen hervorgerufene Unwuchtveränderungen, ohne zusätzliche Kalibrierung direkt erkannt, verglichen und bewertet werden. Letzteres ist für Qualitätssicherungs- und Servicemaßnahmen von besonderer Bedeutung. Außerdem sind die bei flexiblen Rotoren auftretenden modalen Formänderungen umfassend interpretier- und bewertbar. Durch gezielte Beeinflussung der Rotorunwucht können auch Schlüsse auf die Charakterisierung von Lagereigenschaften mit der erfindungsgemäßen Lösung getroffen werden.

Es ist mit der Erfindung und das erfindungsgemäße Meßprinzip eine hohe Meßempfindlichkeit zu verzeichnen.

Mit den gemessenen Schwingungssignalen der Laservibrometer kann über eine geeignete Transformation, bevorzugt eine schnelle Fouriertransformation, die in einem Digital- und/oder Analogrechner (z.B. Hybridrechner) stattfinden, eine Übertragung aus dem Zeitbereich in den Frequenzbereich erfolgen. Neben der Bestimmung der Amplituden, wird auch eine Bestimmung der jeweiligen Phase durchgeführt, wobei hier das für die azimutale Zuordnung erzeugte Triggersignal verwendet wird. Mit dem Triggersignal ist der jeweilige Zeit- bzw. Phasennullpunkt definiert. Dadurch können, je nach Bedarf, Frequenzbereiche bzw. Einzelfrequenzen ausgewählt werden und es kann anschließend eine Rücktransformation aus dem Frequenzbereich in den Zeitbereich durchgeführt werden. Wodurch, wie bereits erwähnt, die jeweiligen Amplitudenwerte und die Phasen für ausgewählte, insbesondere drehfrequente Schwingungen, selektiv entnommen werden können.

Zur Erhöhung der Meßgenauigkeit bei der Bestimmung der Unwuchten mit Laservibrometern kann auch für jedes der Laservibrometer eine Lock-In-Meßtechnik verwendet werden, mit denen jeweils die drehzahlsynchronen Meßwerte in Betrag und Phase bestimmt werden und alle nicht drehzahlfrequenten Anteile unberücksichtigt bleiben können. Dazu ist an die jeweilige Lock-In-Meßtechnik auch das drehzahlabhängige Triggersignal gelegt.

Die schnelle Fouriertransformation kann dann allein zur Überwachung der nicht drehzahlfrequenten Signale verwendet und der Auswertungsaufwand hierfür entsprechend verringert werden. Die Auswertung der so bearbeiteten Signale, also auch mit den drehzahlfrequenten Signalen kann als Vergleichswert bzw. auch als redundantes System genutzt werden.

Durch gezielte Beeinflussung der Unwucht am Rotor, durch z.B. Anbringen bzw. Entfernen von zusätzlichen Massen und Messung der damit verbundenen Änderung der Vibrometersignale kann die Unwuchtbestimmung eines Rotors durch Phasen- und Amplitudenauswertung erfolgen. Durch lineare Beziehungen (Matrixtransformation) aus diesen Meßwerten, kann nach einem bekannten Verfahren die jeweilige Unwucht eines Rotors bestimmt werden.

Mit der Erfindung ist es außerdem möglich, bedarfsweise zur Bestimmung von selbst erregten Schwingungen eines Rotors, auch nicht drehfrequente Signale, hinsichtlich ihrer Amplitude und/oder Phase auszuwerten, wobei insbesondere das Verhalten bei Drehzahlsteigerung und bei gezielter Beeinflussung der Unwucht am Rotor zur Abgrenzung der selbst erregten Schwingungen von unwuchterregten Schwingungen bestimmt werden kann.

Die genannte Transformation aus dem Zeit- in den Frequenzbereich ermöglicht wesentliche Vorteile.

So können im Frequenzbereich die drehfrequenten Schwingungsanteile von den anderen Schwingungsanteilen ohne weiteres getrennt werden. Da die unwuchterregten Kräfte mit der jeweiligen Drehfrequenz genau übereinstimmen, sind allein die drehfrequenten Signale für die Auswuchtung maßgebend. Störende Einflüsse, die andere Frequenzen aufweisen, können ohne weiteres getrennt und gegebenenfalls weiter verarbeitet werden, so daß deren Einflüsse auf die Unwuchtmessung weitgehend unterdrückt werden können. Die Bestimmung der Unwucht bzw. Unwuchten an einem Rotor aus den gemessenen Schwingungssignalen, kann je nach Bedarf mit den transformierten Amplituden- und Phasenwerten im Frequenzbereich oder mit den in den Zeitbereich zurücktransformierten Amplituden und Phasen des drehfrequenten Anteils durchgeführt werden. In beiden Fällen ist es beispielsweise ausreichend, gemäß dem von A. Lingener in "Auswuchten-Theorie und Praxis" Verlag Technik, Berlin, München (1992) beschriebenen Einflußkoeffizientenverfahren durch Kalibrierverläufe mit Testunwuchten eine Zuordnung von gemessenen Wirkungen zu den ursächlichen Unwuchten in linearer Näherung herzustellen. Durch ein iteratives Vorgehen mit abwechselndem Messen und Kompensieren kann die Unwucht sukzessive reduziert werden. Der letztgenannte Fall ist für die absolute Auswertung von Amplituden- und Phaseninformation besonders vorteilhaft, da die transformationsbedingten systematischen Veränderungen der Meßwerte durch die entsprechende Rücktransformation wieder aufgehoben werden. Der Bezug zur Unwucht des Rotors ist direkter und unmittelbarer als im ersten Fall.

Mit der erfindungsgemäßen Lösung können aber auch im Frequenzbereich die Veränderungen der nicht drehzahlfrequenten Meßsignale, bei Drehzahländerung oder Unwuchtveränderungen, unmittelbar erkannt und berücksichtigt werden. Dies ist besonders günstig, wenn die Messungen an Rotoren, die in Gleitlagern gelagert sind, durchgeführt werden. Es kommt in diesen Fällen aufgrund der hydrodynamischen Kräfte, oberhalb lagertypischer Grenzfrequenzen zu selbst erregten Schwingungen, deren Amplitude mit der Drehzahl schnell zu nimmt und schnell zur Berührung von Rotorwelle und Lagerbuchse führen kann. Die Eigenfrequenz der selbst erregten Schwingungen ist bekanntermaßen nur relativ schwach drehzahlabhängig und typischerweise am Einsatzpunkt der Schwingungen, etwa halb so groß wie die Drehfrequenz, während die Amplitude weitgehend unabhängig von der Unwucht des Rotors ist. Es ist von großem Vorteil solche selbst erregten Schwingungsphänomene rechtzeitig erkennen und eindeutig von Unwucht bedingten Schwingungen unterscheiden zu können. Dies wirkt sich besonders vorteilhaft bei den entsprechend gelagerten Rotoren und insbesondere bei luftgelagerten Rotoren im Bereich der hohen Drehzahlen aus. Durch die in Echtzeit durchgeführte Transformation in den Frequenzbereich, kann dem Frequenzspektrum sofort entnommen werden, ob sich ein derartiges Verhalten entwickelt und eine Drehzahlverminderung eingeleitet wurde.

Bei der Messung kann die laterale Ausdehnung der Lichtstrahlen für die Messung auf das jeweilige Meßobjekt (Rotor, Lagerung) durch entsprechende Fokussierung variabel angepaßt werden, wobei es möglich ist, den Lichtstrahl als Meßpunkt auf eine Ausdehnung unterhalb 10 μm zu verkleinern und demzufolge Messungen an sehr kleinen Rotoren durchzuführen. Es können demzufolge erstmals Unwuchtmessungen auch im Bereich der Mikrotechnologie bei sehr großer Miniaturisierung durchgeführt werden, die mit den anderen bekannten mechanischen Meßprinzipien unmöglich sind.

Es ist ohne weiteres möglich, entsprechende Schwingungsmessungen, bei verschiedenen Drehzahlen, auch an verschiedenen Stellen entlang der Längsachse des Rotors durchzuführen, wobei dann auch modale Schwingungen von elastischen Rotoren gezielt erfaßt und berücksichtigt werden können. Die Grundvoraussetzung, nämlich die, daß relativ viele Meßpunkte entlang der Längsachse des Rotors frei gewählt werden können und diese ohne großen Aufwand gezielt ausgewählt, eingestellt bzw. verändert werden können, wird mit der erfindungsgemäßen Lösung erfüllt. Die erforderliche Mikrorauhigkeit der Oberfläche ist fertigungsbedingt fast immer gegeben, oder kann durch Ätzen erzeugt werden. Mit dem einstellbaren sehr kleinen Meßpunkt auf dem Meßobjekt können auch bei sehr kleinen Rotoren, modale Verformungen, mit der erforderlichen Ortsauflösung erfaßt werden.

Durch die große Flexibilität, die durch die berührungslose optische Antastung gegeben ist und dadurch, daß die Zugänglichkeit zum Rotor durch eine gegebenenfalls einstellbare entsprechende Brennweite in der Fokussieroptik nur unwesentlich eingeschränkt ist, kann die Unwuchtmessung auch während der Aufbau- bzw. Zusammenbauphase, eines aus mehreren Einzelteilen gebildeten Rotors, ohne großen Aufwand mehrfach durchgeführt werden, so daß eine Messung, mit jedem zusätzlichen Teil eines solchen Rotors erneut durchgeführt und die durch dieses Teil hervorgerufene Unwuchtveränderung bestimmt und berücksichtigt werden kann.

Dieser Vorteil wirkt sich insbesondere bei solchen Rotoren aus, bei denen einzelne Bauteile eine wesentlich höhere Steifigkeit als die Verbindungsstelle(n) aufweisen, so daß die einem solchen Bauteil nunmehr konkret zuordenbare Unwucht, direkt an diesem Bauteil kompensiert werden kann und demzufolge die Verbindungsstelle solcher Bauteile oder auch andere Bereiche des Rotors nur unwesentlich durch Unwucht verursachte Kräfte belastet werden. Dies ist besonders vorteilhaft bei flexiblen Rotoren und geeignet die Güte der Auswuchtung zu verbessern.

Da bei solcher kombinierten Verfahrensweise der Zusammenbau eines aus mehreren Bauteilen bestehenden Rotors und die Messung der Unwuchten sukzessiv durchgeführt werden kann, sind die jeweils Unwucht bedingten Kräfte kleiner, so daß die Lagerbelastung entsprechend verringert ist und gleichzeitig kann die Güte bei der Auswuchtung verbessert werden.

Bei einer mehrstufigen Durchführung des Auswuchtmeßverfahrens kann, z.B. auf eine bereits ausgewuchtete Welle, eine starre Scheibe exzentrisch oder geneigt aufgesetzt werden, ohne daß eine durch größere Unwucht hervorgerufene Belastung der Fügestelle oder des Rotors auftritt. Durch die Möglichkeit der zuordenbaren Erfassung der auftretenden Unwuchtkräfte zur aufgesetzten Scheibe, kann eine Kompensation ohne weiteres unmittelbar an der Scheibe erfolgen, so daß eine entsprechend ausgewuchtete Scheibe frei von Unwuchten ist und demzufolge auch keine Beeinflussung durch Unwuchten auf die Welle auftritt.

Die Kompensation von erfindungsgemäß gemessenen Unwuchten kann einmal, vorteilhaft bei kleinen Unwuchtwerten, durch einen Masseauftrag erfolgen, indem an der entsprechenden Stelle am Rotor ein, z.B. mittels ultraviolettem Licht aushärtbarer Klebstoff, mit entsprechend einstellbarer Masse aufgebracht und mit der UV-Belichtung ausgehärtet und fixiert wird.

Eine andere Möglichkeit besteht darin, bei der Drehung einen entsprechenden Masseabtrag am Rotor vorzunehmen. Hierzu kann ein Schneid- bzw. Schleifwerkzeug, z.B. ein Drehmeisel, ein Bohrer bzw. ein Schleifstift, die drehfrequenzsynchron über ein z.B. spannungsgesteuertes Piezoelement mit dem Rotor in Kontakt gebracht und wieder getrennt werden, so daß die Berührung und der damit verbundene Massenabtrag im wesentlichen nur an der phasenmäßig geeigneten azimutalen Stelle durchgeführt wird.

Diese beiden Maßnahmen können sowohl alternativ, wie auch in Kombination durchgeführt werden. Das erstgenannte Verfahren für den Unwuchtausgleich, zeichnet sich durch besondere Flexibilität in der Anwendung und sehr einfache und feine Dosiergenauigkeit aus, so daß auch kleinste Unwuchten ausgeglichen werden können. Ein solcher Masseauftrag ist aber auch bei Rotoren aus spröden und harten Materialien, wie z.B. Glas, ohne weiteres anwendbar.

Wird ein Masseabtrag vorgenommen, kann der Unwuchtausgleich bei gleichzeitiger Drehung des Rotors erfolgen, wobei parallele Kontrollmessungen möglich sind, und auf diese Art und Weise der Unwuchtausgleich vollständig bzw. bis innerhalb einer sehr kleinen, vorgebbaren Toleranz vorgenommen werden kann. Dadurch kann der erreichte Unwuchtausgleich oder die Erreichung eines angestrebten Zielwertes, innerhalb eines Toleranzbereiches, unmittelbar kontrolliert werden.

Nachfolgend soll die Erfindung an Ausführungsbeispielen näher beschrieben werden.

Dabei zeigen:

Figur 1      einen erfindungsgemäßen Meßaufbau zur Bestimmung von Unwuchten an einem Rotor, durch Messung an dessen Lagerung;

Figur 2      ein Diagramm, der infolge Unwucht aufgetretenen Auslenkung an einer der Meßstellen mit einem als Zeitbasis dienenden Triggersignal;

Figur 3      ein Diagramm mit transformierten Werten für Amplitude und Phase;

Figur 4      ein zweites Beispiel eines Meßaufbaus zur Bestimmung von Unwuchten, direkt an einem gelagerten Rotor und

Figur 5      ein Diagramm mit dem Schwingungsspektrum im Frequenzbereich.

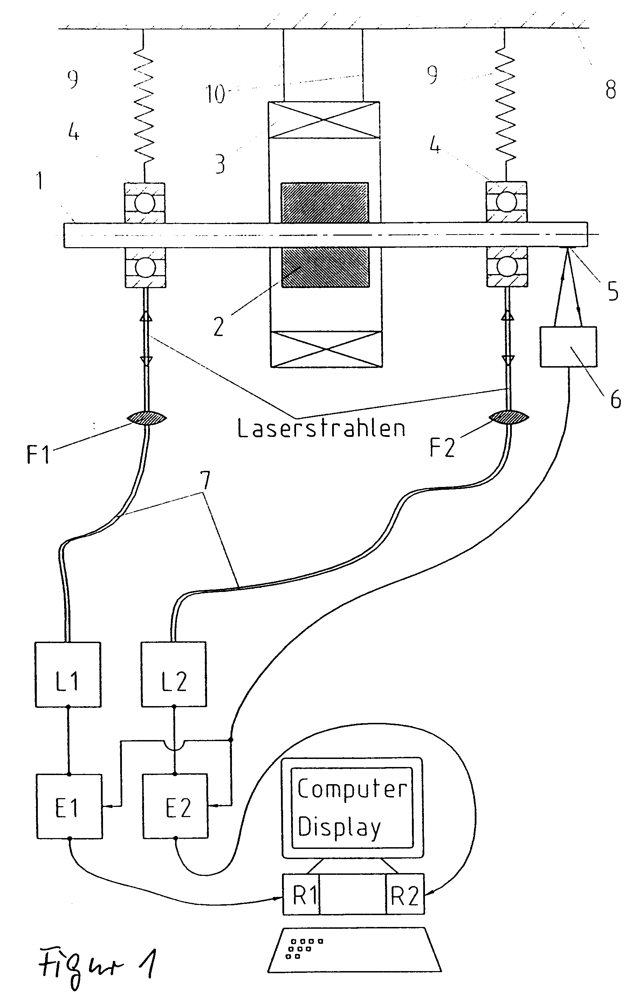

In der Figur 1 ist ein Meßaufbau zur Bestimmung von Unwuchten an einem in Wälzlagern 4 gelagerten Rotor 1 dargestellt. Die Wälzlager 4 sind mit einer elastischen Befestigung 9 an einem starren Gehäuse 8 gehalten.

Für die Messung werden zwei schematisch dargestellte Laservibrometer mit Laserlichtquellen L1 und L2 verwendet. Dabei wird jeweils ein Teilstrahl der Lasereinheiten L1 und L2 über Lichtwellenleiter 7 und eine Optik F1 und F2 orthogonal zur Längsachse des Rotors 1 auf die Wälzlager 4 gerichtet und der von dort reflektierte Lichtstrahl wieder über die Fokussieroptiken F1 und F2, die Lichtwellenleiter 7, die jeweilige Lasereinheit L1 bzw. L2 zur Elektronik E1 und E2 der Laservibrometer und von dort in digitalisierter Form, die gemessenen Werte zu den Auswerterechnern R1 und R2 geleitet.

Das reflektierte Licht wird in den Lasereinheiten L1 und L2 zur Interferenz mit dem zweiten Teilstrahl, dem Referenzstrahl gebracht, wobei das Meßverfahren, bei den an sich bekannten Laservibrometern, in herkömmlicher Form ausgenutzt wird.

Mit den Elektronikeinheiten E1 und E2 werden in Echtzeit die jeweiligen augenblicklichen Auslenkungen X1 und X2, der beiden optisch angetasteten Lagerschalen der Wälzlager 4, in Beobachtungsrichtung zeitabhängig ermittelt. Am Umfang des Rotors 1, der bei diesem Beispiel eine einfache Welle ist, ist eine Marke 5 angebracht, die bei Drehung des Rotors 1 an einem Reflexlichttaster (Reflexlichtschranke) 6 bei jeder Drehung ein Signal (Triggersignal) auslöst, mit dem der Zeitpunkt für jeweils den Abschluß einer Umdrehung und die Periode bestimmt werden.

In der Figur 1 ist zusätzlich ein Rotorantrieb dargestellt, der mit einer starren Befestigung 10, am Gehäuse 8 befestigt ist. Bei diesem Beispiel wird ein Elektromotor als Antrieb verwendet, der auf herkömmliche Art und Weise mit einem Stator 3 und einem Rotor 2 ausgestattet ist.

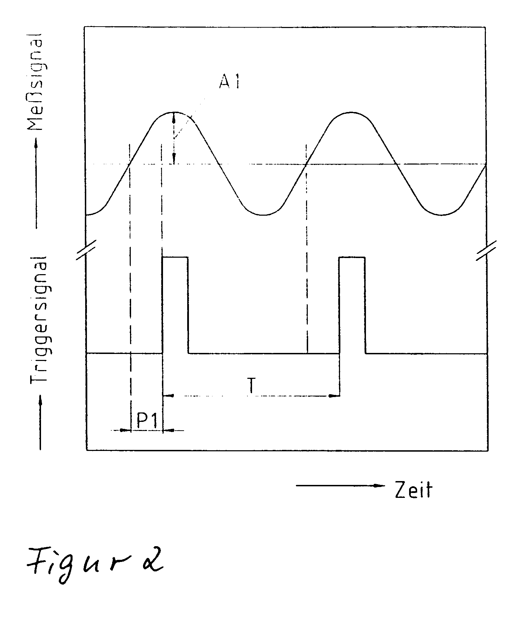

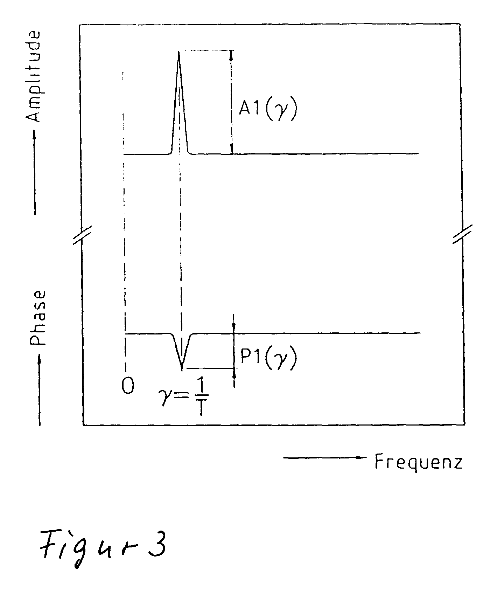

Das in der Figur 2 dargestellte Diagramm zeigt aufgetragen über der Zeit das Meßsignal, das mit der Lasereinheit L1 erfaßt worden ist und unterhalb dazu das entsprechende Triggersignal, das mit der optischen Marke 5 und der Lichtschranke 6 erfaßt wurde. Dabei wurde angenommen, daß eine entsprechende Unwucht am Rotor 1, zu einer sinusoidalen Auslenkung des Lagers 4 führt und keine zusätzlichen Störungen (Rauschen) vorhanden sind. Zur genaueren Ermittlung der Amplitude A1 und der Phase P1 der jeweiligen auftretenden Auslenkung (relativ zum Triggersignal) kann bei Bedarf eine Mittelung über mehrere Umläufe bei konstanter Drehzahl durchgeführt werden. In den beiden Recheneinheiten R1 und R2 werden die periodischen Auslenkungen an den beiden Meßstellen in Echtzeit einer schnellen Fouriertransformation unterzogen, wobei die ansteigende Flanke des Triggersignals jeweils den Zeitpunkt Null bzw. den Beginn einer Periode definiert. Dieses Ergebnis ist im Diagramm, das in der Figur 3 gezeigt ist, wiedergegeben.

Aufgrund der idealisierten Annahme, daß keine störenden Signale vorhanden sind (fehlendes Rauschen), sind für Betrag und Phase jeweils nur ein scharfer Peack im Frequenzspektum bei

$$\nu = 1/T$$

vorhanden. Der Wert des Betrages A1 entspricht der Amplitude des Sinussignals, der Wert der Phase P1 entspricht dem Phasenversatz des Sinussignals gemäß Figur 2. Bei realen Messungen ragen beide Peacks je nach Größe des Sinussignals mehr oder weniger deutlicher aus dem Untergrundrauschen heraus, so daß eine Zuordnung ohne weiteres möglich ist.

Die bereits erwähnte Mittelung über mehrere Umläufe kann auch im Frequenzbereich erfolgen.

Für das Auswuchten werden die Signale im Frequenzbereich an der Stelle der Drehfrequenz für die beiden gemessenen Auslenkungen ermittelt und auf den Zeitbereich wieder zurück transformiert. Dadurch liegen die Amplituden- und Phasenwerte vor, die in an sich bekannter Weise, z.B. im Rahmen des Einflußkoeffizientenverfahrens mit den entsprechenden Werten aus Kalibrierläufen mit bekannten Unwuchten kombinierbar sind, um die Unwucht des Rotors 1 zu bestimmen und entsprechende Ausgleichsmaßnahmen, die beispielhaft im Rahmen der allgemeinen Beschreibung der Erfindung genannt sind, einzuleiten. Für die Durchführung von schnellen Fouriertransformationen kann auf in der Literatur bekannte Möglichkeiten zurückgegriffen werden (FFT Spectrum Analysers; Scientific and Engineering Instruments 1976 - 1997; Stanford Research Systems, Sunnyvale, CA 94089/USA).

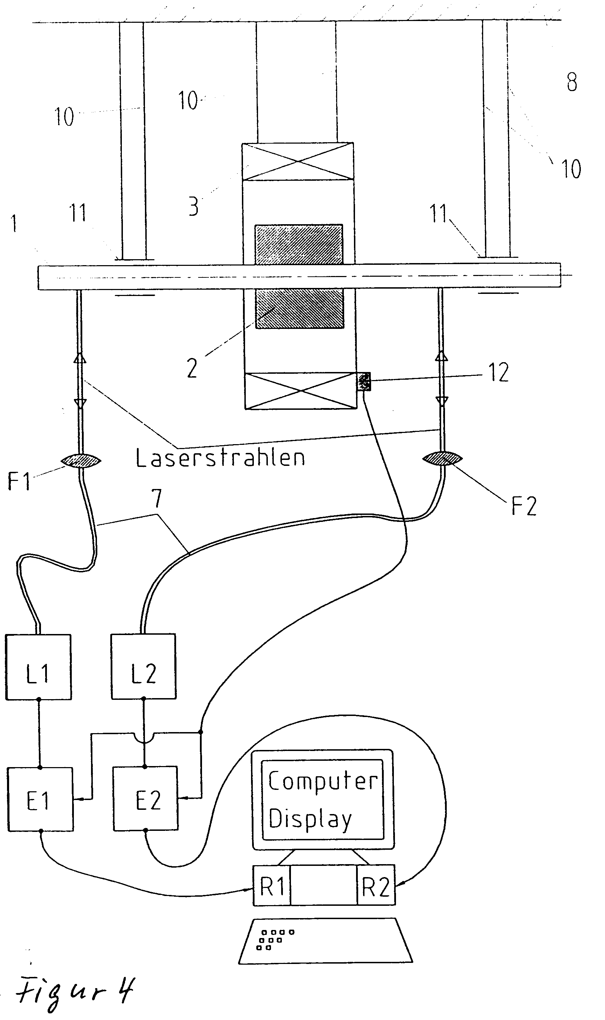

In der Figur 4 ist ein zweites Beispiel für einen erfindungsgemäßen Meßaufbau, zur Bestimmung von Unwuchten an einem Rotor 1, der auch in diesem Fall eine herkömmliche Welle ist, dargestellt. Der Rotor ist in diesem Falle in Gleitlagern 11, die über starre Befestigungen 10 an einem Gehäuse 8 befestigt sind, gelagert.

Der in der Figur 4 gezeigte Meßaufbau, verwendet wieder zwei Laservibrometer, wie dies bereits beim Beispiel gemäß Figur 1 beschrieben worden ist, wobei jedoch die Meßlichtstrahlen unmittelbar auf die Oberfläche des Rotors 1 und auch hier wieder orthogonal zur Längsachse des Rotors 1 gerichtet werden.

Das Triggersignal kann nach diesem Beispiel mit einem Hallsensor 12, der am Antrieb 2 und 3 für den Rotor 1 angeordnet ist, gemessen werden.

Für den Drehantrieb kann ein bürstenloser Gleichstrommotor verwendet werden, der relativ einfach steuerbar ist und beim Umlauf des permanent magnetischen Rotors 2 kann das erforderliche Triggersignal mit Hallsensor 12 erfaßt und so die Phase und Periode bestimmt werden.

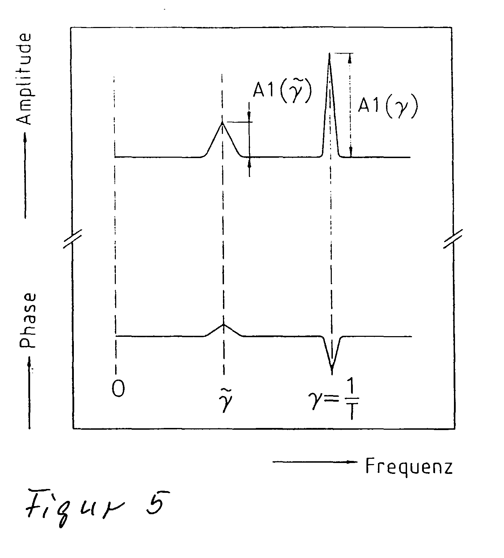

Bei dem in Figur 5 in Form eines Diagrammes gezeigten Schwingungsspektrum im Frequenzbereich, wird eine höhere Drehzahl, als dies im Diagramm nach Figur 3 angenommen worden ist und ein zusätzlicher Schwingungspeack bei etwa halber Drehfrequenz erkennbar. Diese Tatsache ist nicht ungewöhnlich für gasgeschmierte Gleitlager 12. Aufgrund der besonderen Natur aero- und hydrodynamischer Kräfte werden oberhalb gewisser Grenzdrehzahlen selbst erregte Schwingungen mit geringerer Frequenz als Drehfrequenz angeregt, die schnell zur Zerstörung des Lagers führen können. Diese Tatsache kann einmal gesondert ausgewertet und auch bei der Bestimmung der Unwuchten an einem Rotor 1 berücksichtigt werden. Insbesondere kann die Festlegung der Drehzahl für den Auswuchtvorgang, bzw. die Kalibrierung entsprechend dem Einflußkoeffizientenverfahren daran orientiert werden. Bei erkennbarer Selbsterregung wird der Rotor abgebremst und so eine Beschädigung von Rotor oder Lager vermieden.

**Patentansprüche**

1. Verfahren zum Messen von Unwuchten rotierender Körper, bei dem
   mit einem Sensor ein Signal zur Zuordnung der Phase von Meßsignalen bezüglich der azimutalen Lage eines Rotors (1) und mit mindestens zwei Laservibrometern, lokal voneinander getrennt, der jeweilige Schwingungsweg und/oder die Schwingungsgeschwindigkeit am Rotor (1) und/oder seiner Lagerung (4, 11) in radialer Richtung zeitaufgelöst gemessen werden.

2. Verfahren nach Anspruch 1, dadurch gekennzeichnet, daß jeweils ein Meßstrahl einer kohärenten Lichtquelle (L1, L2) der Laservibrometer orthogonal zur Rotationsachse des Rotors (1) auf dessen Oberfläche und/oder seine Lagerung (4, 11) gerichtet und von dort reflektiertes Licht mit dem jeweiligen Referenzstrahl der Laservibrometer zur Interferenz gebracht wird, woraus die Schwingungswege und/oder Schwingungsgeschwindigkeiten bestimmt werden.

3. Verfahren nach Anspruch 1 oder 2, dadurch gekennzeichnet, daß die Laservibrometer entlang der Rotationsachse für die Durchführung lokal voneinander getrennter Messungen verschoben werden.

4. Verfahren nach einem der Ansprüche 1 bis 3, dadurch gekennzeichnet, daß die Messung bei verschiedenen Drehzahlen durchgeführt wird.

5. Verfahren nach einem der Ansprüche 1 bis 4, dadurch gekennzeichnet, daß die Meßsignale/Meßwerte in Digital- und/oder Analogrechnern zur Analyse der drehfrequenten Anteile oder anderer Anteile der Schwingungen in Echtzeit aus dem Zeitbereich in den Frequenzbereich transformiert werden, wobei sowohl Amplituden wie Phasen erfaßt werden.

6. Verfahren nach einem der Ansprüche 1 bis 5, dadurch gekennzeichnet, daß einzelne Frequenzen oder Frequenzbereiche zur Bestimmung bestimmter Amplituden oder Phasen in den Zeitbereich rücktransformiert werden.

7. Verfahren nach einem der Ansprüche 1 bis 6, dadurch gekennzeichnet, daß bei vorgebbarer Drehzahl am Rotor (1) eine definierte, lokal zuordenbare eine Unwucht bewirkende Masseveränderung vorgenommen und so die eigentliche Unwucht des Rotors (1) bestimmt wird.

8. Verfahren nach einem der Ansprüche 1 bis 7, dadurch gekennzeichnet, daß die Amplituden und/oder Phasen außerhalb der Drehfrequenz, zur Erkennung und Charakterisierung selbsterregter Schwingungen des Rotors (1), bestimmt werden.

9. Verfahren nach einem der Ansprüche 1 bis 8, dadurch gekennzeichnet, daß mit einer Fokussieroptik (F1, F2) die Meßpunktgröße, der auf den Rotor (1) oder dessen Lagerung (4, 11) auftreffenden Lichtstrahlen variiert wird.

10. Verfahren nach einem der Ansprüche 1 bis 9, dadurch gekennzeichnet, daß bei einem aus mehreren Einzelelementen zusammengesetzten Rotor (1), der Unwuchteinfluß der jeweiligen Einzelelemente durch sukzessive Messung, bei verschiedenen Zusammenbaustufen eines solchen Rotors (1) bestimmt wird.

11. Verfahren nach Anspruch 10, dadurch gekennzeichnet, daß nach jeder einzelnen Messung der Unwuchtausgleich direkt am jeweiligen Einzelelement durchgeführt wird.

**12.** Verfahren nach einem der Ansprüche 1 bis 11, dadurch gekennzeichnet, daß nach der Unwuchtmessung ein unwuchtausgleichender Masseauftrag, durch Aufbringen einer massedosierten Menge eines härtbaren Klebstoffes, durchgeführt wird.

**13.** Verfahren nach Anspruch 12, dadurch gekennzeichnet, daß der Klebstoff mit UV-Licht ausgehärtet wird.

**14.** Verfahren nach einem der Ansprüche 1 bis 11, dadurch gekennzeichnet, daß nach der Unwuchtmessung der Unwuchtausgleich, durch Masseabtrag mittels eines Schneid- oder Schleifwerkzeuges, das drehfrequenzsynchron mit dem Rotor (1) in Kontakt gebracht und wieder entfernt wird, durchgeführt wird.

**15.** Vorrichtung zur Durchführung des Verfahrens nach einem der Ansprüche 1 bis 14, dadurch gekennzeichnet, daß mindestens zwei Laservibrometer, mit jeweils einer kohärentes Licht abstrahlenden Lichtquelle (L1, L2) und einer Elektronik (E1, E2) so angeordnet sind, daß sie Teillichtstrahlen orthogonal auf den Rotor (1) und/oder dessen Lagerung (4, 11) richten, ein Sensor (6, 12) zur Messung mindestens eines drehzahlsynchronen Signales und mindestens eine elektronische Datenverarbeitungseinheit (R1, R2) vorhanden sind.

**16.** Vorrichtung nach Anspruch 15, dadurch gekennzeichnet, daß die Teilstrahlen über Lichtwellenleiter (7) und Optiken (F1, F2), zur Ein-, Auskopplung und/oder Fokussierung auf die Oberfläche des Rotors (1) und/oder dessen Lagerung (4, 11) gerichtet sind.

**17.** Vorrichtung nach Anspruch 15 oder 16, dadurch gekennzeichnet, daß die elektronische Datenverarbeitungseinheit einen Analogrechner beinhaltet.

Laserstrahlen

F1  F2

L1  L2

E1  E2

Computer
Display

R1  R2

Figur 1

EP 0 969 274 A2

Figur 2

10

Figur 3

Laserstrahlen

Computer
Display

R1    R2

Figur 4

Figur 5